(19) Europäisches Patentamt
European Patent Office
Office européen des brevets

(11) **EP 2 664 903 A2**

(12) **EUROPÄISCHE PATENTANMELDUNG**

(43) Veröffentlichungstag:
**20.11.2013 Patentblatt 2013/47**

(51) Int Cl.:
***G01J 3/433*** (2006.01)    ***G01J 3/44*** (2006.01)
***G01J 3/02*** (2006.01)

(21) Anmeldenummer: **13166591.1**

(22) Anmeldetag: **06.05.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.05.2012   DE 102012104246**

(71) Anmelder: **Deutsche Telekom AG**
**53113 Bonn (DE)**

(72) Erfinder:
• **Schneider, Thomas**
**14552 Michendorf (DE)**

• **Klinger, Jens**
**04416 Markkleeberg (DE)**
• **Preußler, Stefan**
**01612 Nünchritz (DE)**
• **Wiatrek, Andrzej**
**04613 Lucka (DE)**
• **Treff, Stefan**
**04229 Leipzig (DE)**

(74) Vertreter: **Braun-Dullaeus, Karl-Ulrich**
**Braun-Dullaeus Pannen**
**Patent- und Rechtsanwälte**
**Platz der Ideen 2**
**40476 Düsseldorf (DE)**

(54)    **Netzwerkanalysator als Teil eines optischen Spektroskops**

(57)    Verfahren und Vorrichtung zur Bestimmung des Frequenzspektrums einer sich in einem Wellenleiter in einer Vorwärtsrichtung ausbreitenden Probenstrahlung, wobei die Strahlung einer Laserquelle als Pumpstrahlung pixels in entgegen gesetzter Richtung in den Wellenleiter eingekoppelt wird und stimulierte Brillouin Streuung ("SBS") verursacht, wobei die Frequenz der Pumpstrahlung über einen Bereich verändert wird, die Intensität des sich in Vorwärtsrichtung ausbreitenden Brillouin-Gewinns vermittels eines Detektors gemessen wird, wobei das Ausgangssignal des Detektors in Abhängigkeit der veränderten Frequenz der Pumpstrahlung registriert wird und wobei das Frequenzspektrum der Probenstrahlung aus der sich verändernden Intensität des Brillouin-Gewinns bestimmt wird,
**dadurch gekennzeichnet,**
dass die Frequenz der Pumpstrahlung vermittels eines von einem Hochfrequenzsignal 7 angesteuerten Modulators verändert wird, wobei das Hochfrequenzsignal 7 einem Netzwerkanalysator 4 entnommen wird, wobei das Ausgangssignal des Detektors dem Gleichstrom-Eingang des Netzwerkanalysators 4 zugeführt wird und interne Funktionen des Netzwerkanalysators 4 genutzt werden, um das Signal des Detektors zu registrieren und/ oder darzustellen.

Fig. 2

EP 2 664 903 A2

**Beschreibung**

Die Erfindung betrifft ein spektroskopisches Verfahren zur Bestimmung des Frequenzspektrums einer sich in einem Wellenleiter in einer Vorwärtsrichtung ausbreitenden Probenstrahlung. Dazu wird die Strahlung einer Laserquelle als Pumpstrahlung in entgegen gesetzter Richtung in den Wellenleiter eingekoppelt und stimulierte Brillouin Streuung ("SBS") verursacht, wobei die Frequenz der Pumpstrahlung über einen Bereich verändert wird, wobei die Intensität des sich in Vorwärtsrichtung ausbreitenden Brillouin-Gewinns vermittels eines Detektors gemessen wird. Das Ausgangssignal des Detektors wird in Abhängigkeit der veränderten Frequenz der Pumpstrahlung registriert und aus der am Detektor gemessenen Intensitätsschwankung wird das Frequenzspektrum der Probenstrahlung bestimmt. Die Erfindung betrifft auch ein System zur Umsetzung des Verfahrens und einen speziellen Einsatz eines handelsüblichen elektrischen Netzwerkanalysators.

Ganz generell werden Spektroskope in vielen Bereichen von Wissenschaft und Technik benötigt. Beispielsweise ist das hochaufgelöste Echtzeitmonitoring einzelner DWDM-Kanäle im Falle des dichten Wellenlängenmultiplex ("dense wavelength division multiplex", "DWDM") von großer Bedeutung. Dasselbe gilt für Radio over Fiber, orthogonal frequency division multiplexed (OFDM) Systeme und eine Menge weiterer Anwendungen, bei denen hochauflösende optische Spektroskope eingesetzt werden. Diese Anwendungen gehen mit hohen Anforderungen an die Spektroskope einher, da große Wellenlängenbereiche mit hoher Auflösung und in geringer Messzeit untersucht werden.

In diesem Zusammenhang dienen optische Spektrumanalysatoren (sogenannte "OSA") zur Darstellung der Leistungsdichtefunktion ("power density function" oder "PDF") optischer Signale in Abhängigkeit der Wellenlänge oder der Frequenz. Dabei lassen sich mit modernen OSA, die nach dem Prinzip gitterbasierter Monochromatoren arbeiten, große Wellenlängenbereiche ausmessen. Jedoch haben diese OSA lediglich ein eingeschränktes Auflösungsvermögen von etwa 0,06 nm, was bei einer Wellenlänge von 1550 nm einer Auflösung von etwa 7,5 GHz entspricht. Spektrale Anteile unterhalb dieser Auflösegenauigkeit können mit einem solchen OSA somit nicht dargestellt werden. Diese Geräte werden daher für qualitative Analysen genutzt, beispielsweise um in einem DWDM-Kanal im 12,5 GHz-DWDM-Raster (nach ITU-T G.694.1) festzustellen, ob im Kanal überhaupt ein Signal vorhanden ist oder nicht. Ein solcher OSA lässt sich nicht für die Bandbreitenbestimmung von Laserdioden, für OFDM-Systeme oder für das Betrachten von Radio over Fiber-Signalen einsetzen.

Zudem ist der heterodyne Überlagerungsempfang als weitere spektroskopische Methode bekannt. Bei dieser Methode treten jedoch vor allem bei modulierten optischen Signalen störende Kreuz- und Phasenprodukte auf, die das Messergebnis verfälschen. Zudem wird ein besonders schmalbandiger und äußerst linienstabiler verstimmbarer Laser als lokaler Oszillator (LO), ein breitbandiger elektrischer Spektrumanalysator und ein ebenso breitbandiger Photodetektor benötigt. Das Auflösevermögen ist dabei vor Allem von der Linienbreite des LO abhängig und reicht nur bei besonders teuren Ausführungen bis in den kHz-Bereich hinein.

Spektroskopische Systeme, wie sie der vorliegenden Erfindung zugrunde liegen, nutzen den nichtlinearen optischen Effekt der stimulierten Brillouin Streuung (SBS). Mit ihnen können optische Spektren in einer Auflösung von 10 MHz bis 40 MHz dargestellt werden [T.Schneider, Electron. Lett. 41, 1234 (2005) und J. M. S. Domingo et al., IEEE Phot. Technol. Lett. 17, 855 (2005). Im Verhältnis zu den o.g. gitterbasierten OSA wird damit zwar eine Verbesserung der Auflösung um mehr als zwei Größenordnungen erreicht, allerdings sind SBS-basierte OSA mit einem solch hohem Auflösungsvermögen von 80 fm (bei 1550 nm) gegenüber den gitterbasierten Varianten verhältnismäßig kostenintensiv.

Die Aufgaben der vorliegenden Erfindung liegen nunmehr darin, ein Verfahren und eine Vorrichtung zur schnellen und hochauflösenden optischen Spektroskopie zu schaffen, wobei sich Verfahren und Vorrichtung konstruktiv einfach und mit geringem Kostenaufwand realisieren lassen.

Diese Aufgaben werden durch das Verfahren mit den Merkmalen des Anspruch 1 und das System mit den Merkmalen des Anspruch 6 gelöst. Vorteilhafte Ausführungsformen sind in den jeweiligen Unteransprüchen genannt.

Der wesentliche Grundgedanke der Erfindung liegt darin, sich eines einfachen handelsüblichen Netzwerkanalysators zu bedienen und diesen mit einer Zusatzeinheit zu einem schnellen hochauflösenden optischen Spektroskop aufzurüsten. Dabei sei unter dem Merkmal "Netzwerkanalysator" ganz allgemein ein handelsübliches elektrisches Messgerät verstanden, das ausgerüstet ist mit den eingebauten Standard-Funktionen der einstellbaren Hochfrequenzsignal Ausgabe ("RF-Sweep-Generator") und der Gleichspannungs-Messung. Solche handelsüblichen Netzwerkanalysatoren sind insbesondere aus der Nachrichtentechnik bekannt, wo sie zum Messen der Streuparameter von elektrischen Komponenten, insbesondere als Funktion der Frequenz, eingesetzt werden. Insbesondere werden sie dazu verwendet, den Frequenz- und den Phasengang von elektronischen Zweitoren im Wellenlängenbereich zwischen Mikrowelle und Millimeter zu analysieren.

Zwar ist es bekannt, das Transmissionsspektrum optischer Zweitore mit einem Netzwerkanalysator zu untersuchen [Zhenzhou Tang, Shilong Pan, Jianping Yao, Opt. Express 20, 6555 (2012)], der erfindungsgemäße Einsatz eines Netzwerkanalysators als funktionale Einheit eines optischen Spektroskops, das sich zur hochaufgelösten Untersuchung optischer Signale eignet, war bislang unbekannt. Erfindungsgemäß wird ein solcher Netzwerkanalysator im Zusammenhang mit der stimulierten Brillouin-Streuung (SBS) zur Bestimmung des unbekannten Spektrums genutzt.

Dieses Messprinzip ist beispielsweise aus T.Schneider, Electron. Lett. 41, 1234 (2005), bekannt und wird nachfolgend noch einmal kurz erläutert: Bekanntermaßen ist die SBS der nichtlineare Effekt mit dem kleinsten Schwellwert. Bereits wenige mW optischer Leistung genügen, um die SBS in optischen Fasern anzuregen. Bei der SBS wird der größte Teil der Leistung einer starken Pumpwelle an eine sich in entgegengesetzter Richtung ausbreitende, frequenzverschobene Stokeswelle übertragen. Die Frequenzverschiebung hängt von der Art der Faser, der Temperatur und der Wellenlänge ab. Die Stokeswelle hat bei einer Pumpwellenlänge von beispielsweise 1550 nm in Standard-Singlemode-Glasfasern (SSMF) und auch in AllWave®-Fasern eine Frequenzverschiebung von etwa 11 GHz gegenüber der Pumpwelle. Die Bandbreite, in der die SBS stattfindet, ist besonders klein und liegt für AllWave®-Fasern bei etwa 11 MHz. Dementsprechend lässt sich mit einer Pumpwelle eine gegenläufige Welle besonders schmalbandig verstärken, insofern ihr Frequenzunterschied zur Pumpwelle der SBS - Frequenzverschiebung entspricht. Wird die Pumpwelle schrittweise frequenzverschoben, kann mit dem Gewinn der SBS das Spektrum der Probestrahlung ("signal under test", "S.U.T.") schmalbandig abgetastet und damit analysiert werden.

Wie schon oben angedeutet, liegt der Kerngedanke der Erfindung nun darin, eine solche hochauflösende optische Spektrumsanalyse mit einem handelsüblichen Netzwerkanalysator und einem einfachen und preisgünstigen spektroskopischen Zusatzmodul zu bewerkstelligen. Das Zusatzmodul funktioniert im Prinzip mit allen handelsüblichen Netzwerkanalysatoren, wie sie in vielen Laboren und anderen Bereichen vorhanden sind. Mit dem spektroskopischen Zusatzmodul lassen sich Netzwerkanalysatoren auf einfache Weise erweitern.

Das Auflösevermögen eines auf diese Weise geschaffenen Spektroskops liegt um mehr als das hundertfache über der von herkömmlichen gitterbasierten OSA. Dabei liegen die dafür aufzuwendenden Kosten deutlich darunter. Erfindungsgemäß greift das spektroskopische Zusatzmodul auf den Funktionsumfang des Netzwerkanalysators, insbesondere auf dessen technisch ausgereiften RF-Sweep-Generator, der bei modernen Geräten einen großen Frequenzbereich vom MHz-Bereich bis über 40 GHz abdeckt, zurück. Besonders vorteilhaft ist es, dass die Start- und Stopfrequenz des Darstellungs-und Messbereiches beliebig wählbar sind. Eine Neukalibrierung des Netzwerkanalysators ist bei Änderung des Messbereiches nicht notwendig. Zudem kann die "bordeigene" Analog-zu-Digital-Wandlung zur Darstellung des Spektrums genutzt werden, so dass die optische Spektralanalyse bei hoher Auflösung schnell und präzise vonstatten geht. Weitere Vorteile der Synergie zwischen hochauflösendem Spektroskop und einem Netzwerkanalysator sind die inhärenten Analysefunktionen des Netzwerkanalysators mittels Markern, das Aufzeichnen und Vergleichen von Signalverläufen unterschiedlicher Zeitpunkte ("Traces"), das Nutzen der Average-Anzeige, der Export von Messkurven und die Echtzeitfähigkeit der Messung im Frequenzbereich des Netzwerkanalysators.

Vorteilhafterweise umfasst das erfindungsgemäße spektroskopische Zusatzmodul entweder eine einstellbare Laserquelle ("Tunable Laser Source, TLS") oder Laserdiodenkaskaden, so dass vermittels eines Computers mit geringem Programmieraufwand eine hochauflösende Aufnahme des Spektrums über das gesamte optische L- und C -Band vorgenommen werden kann. Unter Einsatz von DWDM-Kaskaden-Laserdioden und einem optischen 1:n Switch kann schnell zwischen der Darstellung von einzelnen DWDM-Kanälen auf dem Analysator/Spektroskop umgeschaltet werden.

Alle benötigten Komponenten sind Standardkomponenten aus dem Bereich der optischen Nachrichtentechnik und der Hochfrequenztechnik, so dass die Erfindung im Vergleich zu den bekannten OSAs eine kostengünstige, robuste und zuverlässige Alternative darstellt.

Nachfolgend wird die Erfindung anhand von Figuren näher erläutert. Es zeigen:

**Figur 1** ein Diagramm "normierte Leistung / Frequenz",

**Figur 2** eine Prinzipskizze des Systems,

**Figur 3** die einzelnen Komponenten des Systems,

**Figur 4** ein System zur Aufnahme von Summenspektren und

**Figur 5** ein System mit kaskadierten Laserdioden.

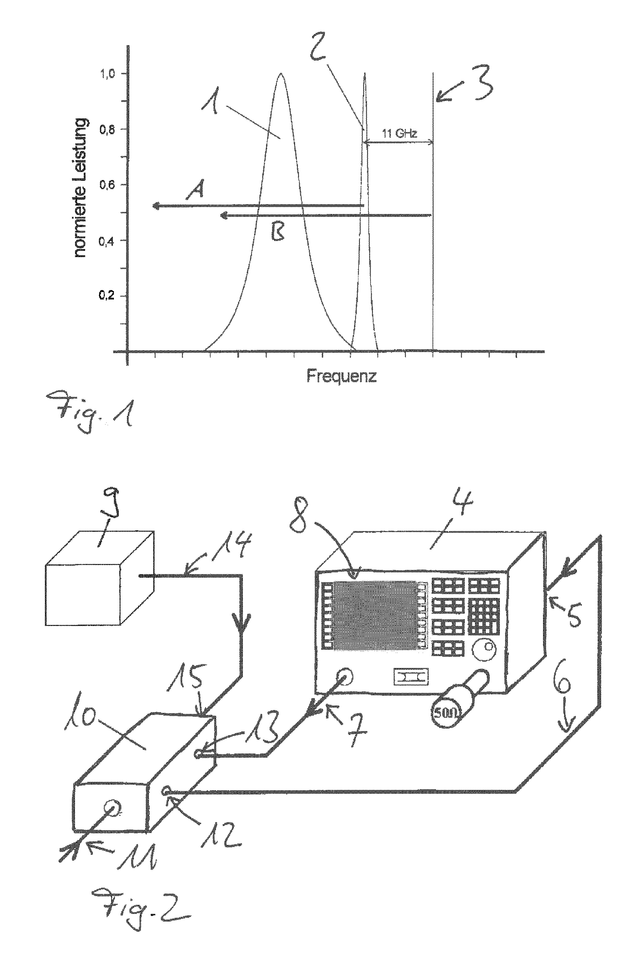

Zunächst verdeutlicht Figur 1 noch einmal die frequenzabhängigen Zusammenhänge zwischen der Probenstrahlung respektive des zu analysierenden Signals 1 ("S.U.T."), dem Brillouin-Gewinn 2 und der Pumpwelle 3. Die angedeuteten horizontalen Pfeile A und B verdeutlichen die Verschiebungsrichtung der Pumpwelle 3 und des daran gekoppelten schmalbandigen Brillouin-Gewinns 2.

Abbildung 2 zeigt zunächst eine Prinzipskizze des erfindungsgemäßen Systems umfassend einen handelsüblichen Netzwerkanalysator 4, dem über einen dafür vorgesehenen Eingang ("DC-Port") 5 ein Gleichstromsignal 6 zugeführt wird, das er in Abhängigkeit von einem über ein Ausgabe-Port ausgegebenes Hochfrequenzsignal 7 auswertet. Bei handelsüblichen Netzwerkanalysatoren dient diese Funktion beispielsweise dazu, um die Betriebsspannung eines Verstärkers in Abhängigkeit seiner Eingangsfrequenz zu untersuchen.

Ein solcher Netzwerkanalysator 4 verfügt gewöhnlich über mehrere Ausgänge, wobei vom Benutzer einer der Ausgänge als RF-Quelle gewählt werden kann. Um hochfrequente Signale zu unterdrücken, werden ungenutzte RF-Ausgänge jeweils mit einem 50 Ohm-Widerstand abgeschlossen.

Erfindungsgemäß wird der Netzwerkanalysator 4 zur Bewältigung verschiedener Aufgaben eingesetzt: Zunächst wird das seiner Quelle entstammende RF-Signal 7 zur schrittweisen Verschiebung der Pumpwelle und damit des SBS-Gewinns genutzt. Auf diese Weise kann das zu testende Signal schmalbandig abgetastet werden. Das an das DC-Port 5 angelegte analoge Messsignal wird vom Netzwerkanalysator 4 in ein digitales Signal gewandelt und als Funktion der Frequenz auf dem integrierten Bildschirm 8 dargestellt. Dabei stellen handelsübliche Netzwerkanalysatoren eine Reihe von weiteren Funktionen zur Auswertung der Signale bereit, ohne dass ein Eingriff in die Hard- oder Software des Geräts nötig wäre.

Als weiteres Element weist das erfindungsgemäße System eine Laserquelle 9 mit geringer Linienbreite und einer hohen Wellenlängenstabilität auf. Weiterhin ist ein erfindungsgemäßes spektroskopisches Zusatzmodul 10 vorhanden, dessen Funktion nachfolgend weiter erklärt wird:

Zunächst wird das zu untersuchende Signal 11 dem Zusatzmodul 10 über einen Eingang zugeführt. Ein Laser 9 erzeugt einen Laserstrahl 14, der dem Zusatzmodul 10 über den Eingang 15 als Pumpstrahlung zugeführt wird. Zur Verschiebung der Pumpstrahlung wird dem Netzwerkanalysator 4 das RF-Sweep-Signal 7 entnommen 4 und in den Eingang "RF-Sweep-Input" 13 des Zusatzmoduls 10 eingespeist. Das Signal des innerhalb des Zusatzmoduls 10 befindlichen Detektors wird über einen Detector-Output 12 entnommen und an das DC-Port 5 des Netzwerkanalysators 4 gelegt.

Die Laserquelle 9 steht bezüglich ihrer Emissionswellenlänge mit dem Spektralverlauf des S.U.T. und dem Frequenzbereich des Netzwerkanalysators in folgendem Zusammenhang:

Unter der Voraussetzung, dass der Brillouingewinn zur Pumpwelle in der verwendeten Faser um $\Delta f_{SBS}$ verschoben ist und sowohl die höchste zu erwartende Frequenzkomponente $f_{maxSUT}$ im S.U.T. als auch die minimale Frequenz des Netzwerkanalysators $f_{NWmin}$ bekannt sind, muss die Frequenz der externen Laserquelle $f_{LD}$ zur Darstellung des S.U.T. auf dem Netzwerkanalysator

$$f_{LD} = f_{maxSUT} + \Delta f_{SBS} + f_{NWmin} \qquad (1)$$

betragen. Mit einer derartigen Lichtquelle ist es daher möglich, ein S.U.T. mit der Bandbreite $BW_{SUT}$ auf einem herkömmlichen Netzwerkanalysator mit einer Maximalfrequenz von $f_{NAmax}$ vollständig darzustellen, wobei gilt:

$$BW_{SUT} = f_{NAmax} - \Delta f_{SBS} \qquad (2)$$

Breitere Spektren können mittels eines Computers zusammengesetzt und dargestellt werden. Dazu werden Teilmessungen für unterschiedliche Wellenlängen der externen Laserquelle vorgenommen.

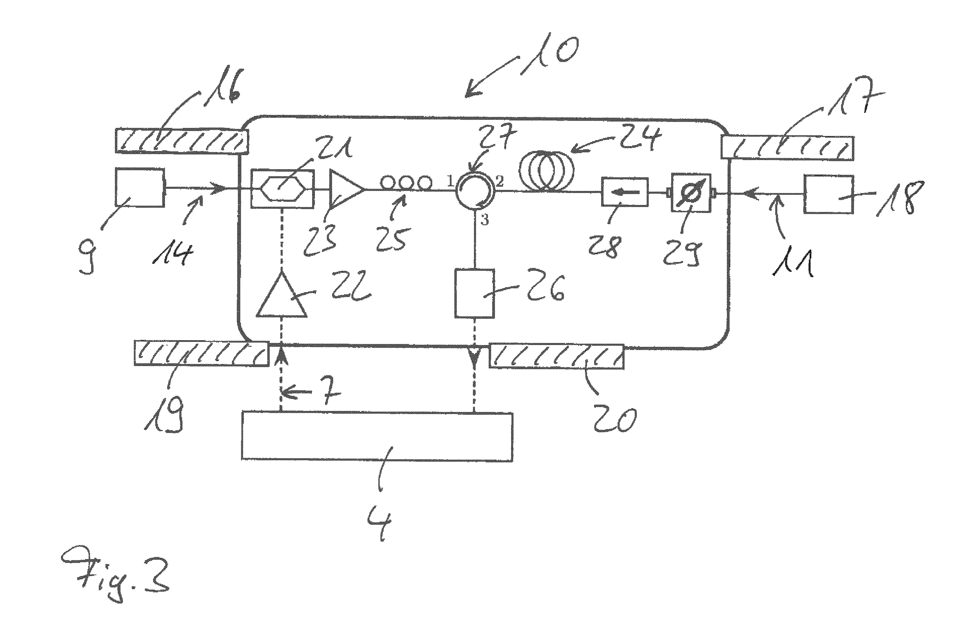

Figur 3 zeigt die einzelnen Komponenten des Systems und ihr Zusammenwirken innerhalb des Zusatzmoduls 10. Dabei kennzeichnen ununterbrochene Linien den Weg optischer Signale, wobei unterbrochene Linien elektrische Signale symbolisieren. Das Zusatzmodul 10 weist die oben genannten vier benötigten Ports auf, die als schraffierte Rechtecke symbolisiert sind. Über das Port "Light-Source In" 16 wird die Strahlung des Lasers 9 zugeführt. Hingegen wird das zu untersuchende Signal 11 der Quelle 18 über das Port 17 "S.U.T. In" eingespeist. Der handelsübliche Netzwerkanalysator 4 gibt das RF-Signal 7 über einen Eingang "RF-Sweep In" 19 in das Zusatzmodul 10 ein. Dem Port "Detector Out" 20 des Zusatzmoduls 10 wird das im Detektor erzeugte Gleichstromsignal entnommen und dem Netzwerkanalysator 4 zugeführt.

Das Zusatzmodul 10 umfasst nachfolgende Komponenten: Zunächst ist ein breitbandiger Intensitätsmodulator 21 vorgesehen, der auf der Strahlung 14 der externen Laserquelle 9 eine optische Zweiseitenbandmodulation mit Trägerunterdrückung erzeugt. Das RF-Signal 7 zur Einstellung des Intensitätsmodulators 21 entstammt dem Netzwerkanalysator 4 und wird über das Port "RF-Sweep In" 19 eingekoppelt. Dabei wird der Netzwerkanalysator 4 auf eine konstante Ausgangsleistung für alle Frequenzen eingestellt, sodass über den Verstärker 22 am RF-Eingang des Intensitätsmodulators 21 eine ausreichende Leistung zur deutlichen Ausbildung der optischen Zweiseitenbandmodulation anliegt.

Mit einem Faserverstärker 23 werden beide aus dem Intensitätsmodulator 21 ausgekoppelten Seitenbänder soweit verstärkt, dass in einer ausreichend langen Faser 24 der SBS-Schwellwert erreicht wird. Dabei haben die Pumpwellen und die rückgestreute SBS-Gewinne dieselben Leistungsamplituden.

Mit einem Polsteller 25 kann die Überlagerung zwischen rücklaufendem SBS-Gewinn und angeschlossenem S.U.T. im Brillouin-Medium 24 optimiert werden, um am Photodetektor 26 den maximalen Dynamikbereich zu detektieren. Über den Zirkulator 27 strahlen die Pumpwellen von Port 1 nach Port 2 des Zirkulators 27 in das Brillouin-Medium 24 dem S.U.T. 11 entgegen. Das S.U.T. 11 und die SBS Gewinne werden von Port 2 des Zirkulators 27 über dessen Port 3 zum Photodetektor 26 geleitet.

Durch die Einspeisung der beiden verstärkten Pumpwellen aus der Zweiseitenbandmodulation im Brillouin-Medium kommt es zur Ausbildung des nichtlinearen Effektes der SBS. Ein Isolator 28 verhindert das Einstrahlen der entgegenlaufenden Pumpwellen in den Ausgang des variablen optischen Dämpfungsgliedes ("variable optical attenuator") 29. Dieser variable optische Attenuator 29 dämpft das S.U.T., so dass die maximale Leistung des S.U.T. jederzeit unterhalb der Leistung des SBS-Schwellwertes liegt. Damit tritt keine Sättigung des SBS-Gewinnes auf, die den Dynamikbereich der Messung beeinträchtigen würde.

Liegt ein Anteil des Leistungsdichtespektrums des S.U.T. auf der gleichen Wellenlänge wie der Brillouin-Gewinn, wird in der Testfaser 24 der Schwellwert der SBS überschritten und es kommt zur Verstärkung des spektralen Anteiles im S.U.T.. Diese Verstärkung wird von dem schmalbandigen Photodetektor 26 als eine Erhöhung des DC-Anteils im Signal erkannt. Befindet sich kein Anteil des S.U.T. im Sweepbereich des SBS-Gewinnes, so ist der DC-Anteil im Signal immer gleich. Tritt jedoch ein Anteil im Sweepbereich des SBS-Gewinnes auf, so erhöht sich der DC-Wert am elektrischen Port des Detektors 26, das mit dem DC-Eingang des Netzwerkanalysators 4 verbunden ist. Damit lässt sich das Signal auf dem Bildschirm darstellen.

Der Netzwerkanalysator dient damit einerseits als RF-Sweep-Quelle und andererseits zur Darstellung des S.U.T.. Er bietet zusätzlich "bordeigene" Analysewerkzeuge, wie Marker, Traces, Average-Funktion, Datenexport und Ähnliches. Dazu hat das Gerät die Möglichkeit, das Signal an einem DC-Eingang in Abhängigkeit von der ausgegebenen RF-Frequenz aus einem seiner Ports darzustellen. Die ausgegebene RF-Frequenz wird über den Verstärker 22 verstärkt und an den RF-Eingang des Intensitätsmodulators 21 geführt

Am Beispiel der Überwachung eines DWDM-Kanals wird nachfolgend das erfindungsgemäße System zur Spektroskopy näher erklärt:

Zunächst wird die Frequenz der benötigten externen Laserquelle berechnet. Nach Gleichung (1) ist dies abhängig von der höchsten Frequenz, die im S.U.T. vorkommt. Ausgehend von dem 12,5 GHz DWDM-Raster und einem Abstand der Centerfrequenz von benachbarten Kanälen von $\Delta f_{c\,DWDM}$ = 12,5 GHz nach ITU-T Rec. G.694.1 (06/2002), einer angenommenen Centerfrequenz des S.U.T. von $f_{C\,SUT}$ = 193,1 THz respektive $\lambda_{C\,SUT}$ = 1552.52 nm und einer entsprechend maximal zu erwartenden Bandbreite des S.U.T. von $BW_{SUT}$ = 12,5 GHz ergibt sich die höchste zu erwartende Frequenzkomponente im S.U.T. zu

$$f_{maxSUT} = f_{C\,SUT} + \Delta f_{C\,DWDM} / 2 = 193{,}10625 \text{ THz} \qquad (3)$$

Ausgehend davon, dass der Brillouingewinn zur Pumpwelle in einer AllWave®-Faser um $\Delta f_{SBS}$ = 10,88 GHz verschoben ist und die minimale Frequenz eines Netzwerkanalysators beispielsweise $f_{NW\,min}$ = 100 MHz beträgt, so muss die Frequenz der externen Laserquelle $f_{LD}$ zur Darstellung des DWDM-Kanals bei 193,1 THz auf dem Netzwerkanalysator

$$f_{LD} = f_{maxSUT} + \Delta f_{SBS} + f_{NWmin} = 193{,}11714 \text{ THz} \qquad (4)$$

betragen. Dies entspricht etwa einer Wellenlänge von $\lambda_{LD}$ = 1552.39 nm. Die Centerfrequenz des DWDM-Kanals, der nach dem 12,5 GHz-Raster neben dem zu untersuchenden Kanal liegt, beträgt in diesem Beispiel $f_{cSUT+1}$ = 193,1125 THz. Mit einer solchen Lichtquelle (DWDM-Kaskade) kann der Nachbarkanal demnach auf einem Netzwerkanalysator mit einer Maximalfrequenz von

$$\begin{aligned} f_{NAmax} &= f_{LD} - f_{cSUT+1} + \Delta f_{SBS} + BW_{SUT} \qquad (5) \\ &= 193117{,}14 - 193112{,}5 + 10{,}88 + 12{,}5) \text{ GHz} \\ &= 28{,}02 \text{ GHz} \end{aligned}$$

mit $f_{cSUT+1}$ = 193,1 THz hochaufgelöst dargestellt werden. Mit einem 40 GHz-Netzwerkanalysator können auf diese Weise sogar zwei direkt benachbarte 12,5 GHz Kanäle gleichzeitig überwacht werden, ohne dass die Wellenlänge der externen Laserquelle verändert werden muss. Nach dem Beispiel ergibt sich $f_{cSUT1}$ = 193,1 THz und $f_{cSUT2}$ = 193,0875 THz.

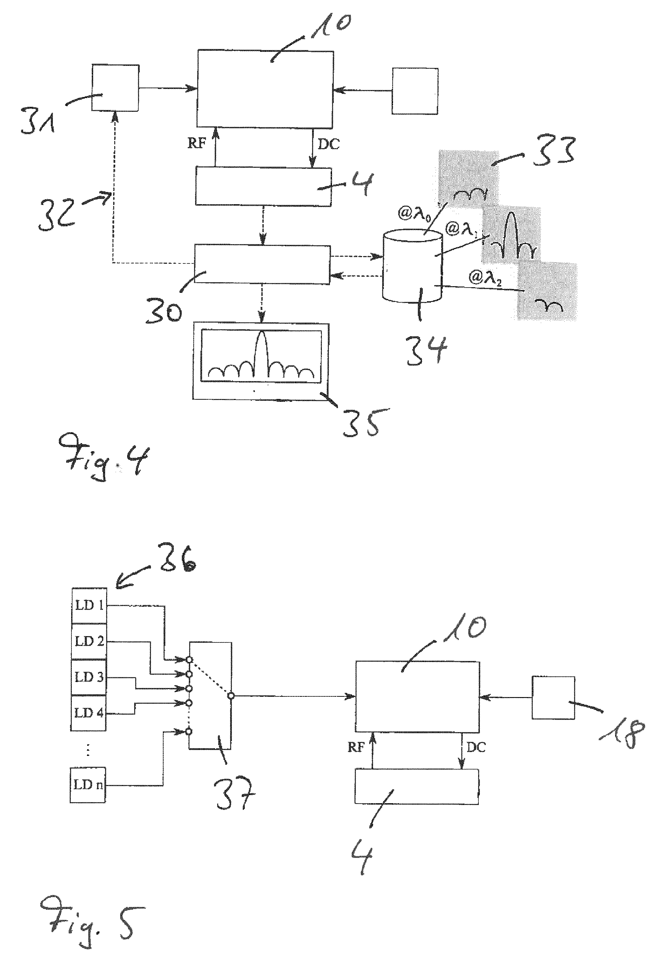

Durch den Einsatz einer einstellbaren Laserquelle ("Tunable Laser Source" oder "TLS") oder mit Hilfe von Laserdiodenkaskaden kann mit Hilfe eines Computers und mit geringem Programmieraufwand eine hochauflösende Aufnahme des Spektrums beispielsweise über das gesamte optische L- und C-Band vorgenommen werden. Figur 4 verdeutlicht dieses Prinzip:

Ein Logikmodul 30 steuert die TLS 31 über den elektrischen Kanal 32 und setzt die TLS 31 zu Beginn der Messung auf die Startfrequenz entsprechend Gleichung (1). Die Messung wird vermittels des Zusatzmoduls 10 über den Sweepbereich des Netzwerkanalysators 4 wie oben beschrieben vorgenommen, wobei die Messwerte durch das Logikmodul 30 aus dem Netzwerkanalysator 4 ausgelesen werden. Diese Werte werden als Teilspektrum 33 in einem Speicher 34 zwischengespeichert. Dieser Vorgang wiederholt sich zyklisch, wobei zwischen jedem n-ten Messvorgang die Frequenz $f_{LD,n}$ der TLS 31 in Abhängigkeit von der Bandbreite des Netzwerkanalysators 4 nach

$$f_{LDn} \;=\; f_{LD} \,+\, (n+1)*BW_{NW} \qquad\qquad (6)$$

verschoben wird. Sobald das Spektrum vollständig erfasst worden ist, erfolgt die Zusammenfassung der Einzelmessungen und die Darstellung der Gesamtkurve auf einem dem Logikmodul 30 zugeordneten Bildschirm 35.

Figur 5 zeigt ein erfindungsgemäßes System unter Einsatz von kaskadierten Laserdioden 36 und einem optischen 1:n-Switch 37. Mit einem solchen kann schnell zwischen der Darstellung der einzelnen optischen Kanäle auf dem Analysator/Spektroskop umgeschaltet werden. Dazu emittieren mehrere Laserquellen (LD 1, ... LD n) Licht unterschiedlicher Frequenzen, um jeweils ein Signal SUT der Quelle 18 mit der Bandbreite $BW_{SUT}$ auf dem Netzwerkanalysator 4 darstellen zu können, welches die Bandbreite des Netzwerkanalysators $BW_{NW}$ nicht überschreitet und sich in einem jeweils anderen optischen Frequenzbereich befindet. Durch Zuschalten einer bestimmten Laserquelle (LD 1, LD n) über den optischen n:1-Switch wird das gewünschte Signal ausgewählt. Während beispielsweise mit LD 1 ein 10Gbps NRZ-Signal in einem Kanal dargestellt wird, kann LD 2 ein weiteres Signal in einem anderen Kanal darstellen. Die Emissionsfrequenz der eingesetzten n-ten Laserquelle $f_{LD\_n}$ berechnet sich nach Gleichung (1). Bedingung für dieses Prinzip des umschaltbaren Messbereiches über kaskadierte Laserquellen ist $BW_{SUT} <= BW_{NA}$.

## Patentansprüche

1.   Verfahren zur Bestimmung des Frequenzspektrums einer sich in einem Wellenleiter in einer Vorwärtsrichtung ausbreitenden Probenstrahlung, wobei die Strahlung einer Laserquelle als Pumpstrahlung in entgegen gesetzter Richtung in den Wellenleiter eingekoppelt wird und stimulierte Brillouin Streuung ("SBS") verursacht, wobei die Frequenz der Pumpstrahlung über einen Bereich verändert wird, wobei die Intensität des sich in Vorwärtsrichtung ausbreitenden Brillouin-Gewinns vermittels eines Detektors gemessen wird, wobei das Ausgangssignal des Detektors in Abhängigkeit der veränderten Frequenz der Pumpstrahlung registriert wird und wobei das Frequenzspektrum der Probenstrahlung aus der sich verändernden Intensität des Brillouin-Gewinns bestimmt wird,
**dadurch gekennzeichnet,**
**dass** die Frequenz der Pumpstrahlung vermittels eines von einem Hochfrequenzsignal (7) angesteuerten Modulators verändert wird, wobei das Hochfrequenzsignal (7) einem Netzwerkanalysator (4) entnommen wird, wobei das Ausgangssignal des Detektors dem Gleichstrom-Eingang des Netzwerkanalysators (4) zugeführt wird und interne Funktionen des Netzwerkanalysators (4) genutzt werden, um das Signal des Detektors zu registrieren und/oder darzustellen.

2.   Verfahren nach Anspruch 1,
**dadurch gekennzeichnet, dass** das Hochfrequenzsignal (7) von dem RF-Sweep-Generator eines handelsüblichen Netzwerkanalysators (4) erzeugt wird, wobei die Start- und Stopfrequenz des Messbereiches und/oder des Darstellungsbereiches am Netzwerkanalysator (4) eingestellt wird.

3.   Verfahren nach Anspruch 1 oder 2,
**dadurch gekennzeichnet, dass** die interne Analog-zu-Digital-Wandlung des Netzwerkanalysators (4) für die optische Spektralanalyse mit hoher Auflösung genutzt wird.

4. Verfahren nach einem der vorherigen Ansprüche,
   **dadurch gekennzeichnet, dass** eine in ihrer Frequenz einstellbare Laserquelle ("Tunable Laser Source" oder "TLS") (30) vermittels eines Logikmoduls (31) eingestellt wird, wobei dem Logikmodul (30) die im Netzwerkanalysator (4) vorliegenden Messwerte zugeführt und als Teilspektrum (33) in einem Speicher (34) zwischengespeichert werden, wobei mehrere Teilspektren (33) zu einem Gesamtspektrum addiert und insbesondere auf dem Bildschirm (35) des Netzwerkanalysators (4) dargestellt werden.

5. Verfahren nach einem der vorherigen Ansprüche,
   **dadurch gekennzeichnet, dass** als Laserquelle über einen optischen Schalter (37) gekoppelte Laserdioden (36) unterschiedlicher Frequenz eingesetzt, wobei zwischen der Darstellung der einzelnen optischen Kanäle auf dem Analysator/Spektroskop umgeschaltet wird, wobei durch Zuschalten einer bestimmten Laserdiode (LD 1, LD n) das gewünschte Signal über den optischen Schalter ausgewählt wird.

6. System zur Durchführung des Verfahrens nach einem der Ansprüche 1 bis 5, **gekennzeichnet durch**
   einen handelsüblichen Netzwerkanalysator (4), ein spektroskopisches Zusatzmodul (10) und eine Laserquelle (9), wobei ein dem Ausgabe-Port des Netzwerkanalysators (4) ausgegebenes Hochfrequenzsignal (7) einem "RF-Sweep-Input" Eingang (13) des Zusatzmoduls (10) zugeführt ist,
   wobei ein einem Detektor (26) des Zusatzmoduls (10) entstammendes Signal über einen "Detector-Output" (12) einem Gleichspannungseingang (5) des Netzwerkanalysators (4) zugeführt ist und
   wobei das Zusatzmodul (10) einen Eingang (15) zur Zuführung von Pumpstrahlung und einen Eingang zur Zuführung von Probestrahlung aufweist.

7. System nach Anspruch 6,
   **dadurch gekennzeichnet, dass** das Zusatzmodul (10) einen breitbandigen Intensitätsmodulator (21) aufweist, der vermittels des über den Eingang (13) eingekoppelten Hochfrequenzsignals des Netzwerkanalysators (4) einstellbar ist.

8. System nach Anspruch 6 oder 7,
   **gekennzeichnet durch** eine in ihrer Frequenz einstellbare Laserquelle ("Tunable Laser Source") (30) und ein Logikmodul (31) zu deren Einstellung und zur Verarbeitung der im Netzwerkanalysator (4) vorliegenden Messwerte.

9. System nach Anspruch 6 oder 7,
   **dadurch gekennzeichnet, dass** eine Kaskade von Laserdioden (36) die Laserquelle bildet, wobei die Laserdioden über einen optischen Schalter ("1:n-Switch") (37) zusammengeführt sind.

10. Verwendung eines handelsüblichen Netzwerkanalysators (4) zum Einsatz in einem System nach einem der Ansprüche 6 bis 9, wobei das vom Netzwerkanalysator (4) ausgegebene Hochfrequenzsignal zur Änderung der Frequenz der Pumpstrahlung verwendet wird und wobei die Funktionen des Netzwerkanalysators (4) zur Analyse und/oder Darstellung von Messwerten verwendet wird.

Fig. 1

Fig. 2

8

Fig. 3

EP 2 664 903 A2

RF   DC

@$\lambda_0$
@$\lambda_1$
@$\lambda_2$

*31*
*32*
*30*
*10*
*4*
*33*
*34*
*35*

Fig. 4

LD 1
LD 2
LD 3
LD 4
⋮
LD n

RF   DC

*36*
*37*
*10*
*18*
*4*

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T.SCHNEIDER.** *Electron. Lett.,* 2005, vol. 41, 1234
- **J. M. S. DOMINGO et al.** *IEEE Phot. Technol. Lett.,* 2005, vol. 17, 855
- **ZHENZHOU TANG ; SHILONG PAN ; JIANPING YAO.** *Opt. Express,* 2012, vol. 20, 6555